# EUROPEAN PATENT SPECIFICATION

(11) **EP 4 478 160 B1**
(45) Date of publication and mention of the grant of the patent: **29.07.2026**
(21) Application number: 24181629.7
(22) Date of filing: 12.06.2024
(51) Int. Cl.: G06F 3/01, G06T 13/40

(54) **METHOD AND SYSTEM FOR GENERATING HUMAN DIGITAL TWIN FOR VIRTUAL ENVIRONMENT**
VERFAHREN UND SYSTEM ZUR ERZEUGUNG EINES DIGITALEN MENSCH-ZWILLINGS FÜR EINE VIRTUELLE UMGEBUNG
PROCÉDÉ ET SYSTÈME DE GÉNÉRATION DE JUMEAU NUMÉRIQUE HUMAIN POUR ENVIRONNEMENT VIRTUEL

(30) Priority: 14.06.2023 IN 202331040452
(43) Date of publication of application: 18.12.2024
(73) Proprietor: Siemens Aktiengesellschaft, 80333 München (DE)
(72) Inventor: -, Gaurav, 560100 Bangalore, Karnataka (IN); KUMAR, Palani, 560076 Bangalore, Karnataka (IN); MAHESHWARI, Asheesh, 560100 Bengaluru, Karnataka (IN)
(74) Representative: HKW Intellectual Property PartG mbB

(56) References cited:
- EP-A1- 4 243 001
- WO-A1-2022/098261
- US-A1- 2011 054 870
- US-A1- 2013 198 625
- US-A1- 2017 003 738

## Description

The present disclosure relates generally to digital twins and immersive environment, and more specifically to a method and a system for generating a human digital twin for a virtual environment.

Generally, immersive virtual environments are being used in various domains such as healthcare, industry, research, education, entertainment, etc to present comprehensive and representative information to users. Metaverse is an immersive virtual environment that acts as a shared space for the users to interact with each other and with digital objects. Industrial metaverse is an extension of the metaverse customized specially to cater to industrial applications. The industrial metaverse is a virtual environment that contains a complex interplay of various digital objects including but not limited to digital twins of various machines, simulations, and data analytics. The simulations and the data analytics often mimic a nature in which the digital twins interact with each other. Thus, the industrial metaverse is a concept in which real industry is replicated in the virtual environment accurately taking into consideration laws of nature and laws of physics.

Digital human is a digital twin as a human in the virtual environment where the digital human assumes communication and coordination tasks for example of an employee within a production system. However, digital version of a human being is often inaccurately represented in the metaverse since human beings are intelligent biological organisms that evolved in nature unlike machines that are created by the human beings. The human beings are sentient beings having cognitive intelligence, exhibiting emotions and creativity. Therefore, it may not be possible to generate the digital version of the human being accurately representing all aspects of the human being such as physical aspects, emotional aspects, behavioural aspects, social aspects, spiritual aspects, etc. Thus, it is desired to at least provide a mechanism that is devoid of the above issues.

Conventionally, the above-mentioned problem is addressed by combining motion capture technology and musculoskeletal model to display muscle forces and joint torques in real time visualizations. Also, methods for providing digital data of an individual includes using the human digital twin as a combination of body shape model, musculoskeletal model, finite element model etc. and unifies them along with medical data and stores them. However, the conventional methods are not efficient enough to capture the human motion accurately and transfer the same to the digital human for replication of the same in the virtual environment.

Conventional methods also use artificial intelligence (AI) based models to predict desired motion capture data from videos. However, the conventional method does not talk about the human-human interaction, human-machine interaction in the virtual environment which makes the conventional method ineffective in the virtual environment.

In all the above scenarios, the digital version of human being or the digital human is often inaccurately represented entity in the virtual environment.

Further, some physical functions performed by the human beings can be digitally recreated using conventional technologies. Examples of the physical functions performed by the human beings include but may not be limited to:
1. as an operator performing a set of tasks in an assembly line in an industry,
2. as an athlete jogging on a treadmill in a gym to improve physique,
3. as a driver sitting in a specific posture and driving or riding or flying a vehicle,
4. as a construction worker doing activities such as lifting weights, assembling blocks, etc.,
5. as a medical professional performing surgery,
6. as an engineer working in front of a computer for long hours,
7. as an agricultural laborer working in an open field or a modern vertical farm, etc.

In the above examples, there are various physiological and biological aspects such as skeletal system, musculoskeletal system, respiratory system, cardiovascular system, and physical aspects such as his or her interaction with other objects can be digitally modelled.

Here, there is also a need for real time communication of data between a human and corresponding digital twin. In industrial applications, the approach to manufacturing needs to be performed with a human-centric perspective that emphasizes on collaboration between humans and machines. This approach is supported and aided by technologies such as data capture through IMU sensors, motion capture technologies, big data analytics, low latency networking protocols, haptic feedback etc.

WO 2022/098261 A1 relates the safe training of medical personnel under pandemic conditions. It discloses a system comprising an Extended Reality (XR) station including a set of realistic virtual reality scenarios relating to the development of occupational safety skills in medical personnel under pandemic conditions, as well as to the diagnosis and treatment of COVID-19 patients. A trainee can easily move in the space, see him/herself, and interact with different interactive objects with one's own hands without any wires or controllers.

US 2011/054870 A1 describes a system, method, and computer program product for providing a user with a virtual environment in which the user can perform guided activities and receive feedback. The user is provided with guidance to perform certain movements. The user's movements are captured in an image stream. The image stream is analyzed to estimate the user's movements, which is tracked by a user-specific human model. Biomechanical quantities such as center of pressure and muscle forces are calculated based on the tracked movements. Feedback such as the biomechanical quantities and differences between the guided movements and the captured actual movements are provided to the user.

In light of the above, there remains a need to build a real-time, connected as well as biologically accurate, interactive, and collaborative human digital twin for all future applications which are highly accurate and effective for all applications.

The present disclosure seeks to overcome the above-mentioned challenges by capturing the motion of the human body using multiple inputs and then generating simulations using the captured motion of the human body. These simulations are then superimposed on the digital human to obtain a comprehensive and highly representative digital human which is close to the human body under consideration.

Therefore, the goal of the technology described herein is to formulate accurate, efficient, and highly representative digital human.

The object of the present disclosure is achieved by a computer-implemented method for generating a digital human for a virtual environment. The method includes capturing motion of a human body through multiple inputs associated with the human body and generating a motion capture file comprising multiple marker positions associated with the motion of the human body. The method also includes determining a biomechanical simulation and a Musculo-skeletal simulation for the digital human using the motion capture file, superimposing the biomechanical simulation and the Musculo-skeletal simulation on the digital human corresponding to the human body and displaying the digital human in the virtual environment.

In one or more embodiments, the method further includes providing a non-human digital object and another human digital twin in the virtual environment and allowing multiple interactions between the digital human with the non-human digital object and another human digital twin, in the virtual environment. The method includes displaying the multiple interactions between the digital human with the non-human digital object and another human digital twin in the virtual environment.

In one or more embodiments, the method further includes detecting Musculo-skeletal force experienced by the digital human during the multiple interactions with the non-human digital object and determining that the detected Musculo-skeletal force does not match a predefined Musculo-skeletal force threshold. The method also includes modifying the plurality of interactions between the non-human digital object and the digital human to match the predefined Musculo-skeletal force threshold and displaying the modified multiple interactions between the non-human digital object and the human digital twin in the virtual environment.

In one or more embodiments, modifying the plurality of interactions between the non-human digital object and the digital human to match the predefined Musculo-skeletal force threshold includes determining a haptic feedback based on the Musculo-skeletal force experienced by the digital human during the plurality of interactions with the non-human digital object; sending the haptic feedback to the human body; and modifying the plurality of interactions between the non-human digital object and the digital human to match the predefined Musculo-skeletal force threshold, based on the haptic feedback.

In one or more embodiments, the method further includes providing another digital human in the virtual environment along with the digital human; transferring forces between the digital human and another digital human at appropriate points of contacts; and allowing multiple interactions between digital human and another digital human in the virtual environment based on the transferred forces.

In one or more embodiments, the appropriate points of contacts are determined based on the plurality of marker positions from the motion capture file.

In one or more embodiments, the digital human comprises one of a digital twin of the human body, and an avatar of the human body.

In one or more embodiments, the plurality of interactions between the digital human and the at least one non-human digital object in the virtual environment comprises performing a set of actions by the digital human on the non-human digital object in the virtual environment.

The object of the present disclosure is also achieved by a system for generating a digital human for a virtual environment. The system includes a processor and a memory coupled to the processor. The memory includes instructions which, when executed by the processor, configures the processor to capture motion of a human body through multiple inputs associated with the human body and generate a motion capture file comprising multiple marker positions associated with the motion of the human body. The processor is also configured to determine a biomechanical simulation and a Musculo-skeletal simulation for the digital human using the motion capture file; superimpose the biomechanical simulation and the Musculo-skeletal simulation on the digital human corresponding to the human body and display the digital human in the virtual environment.

The object of the present disclosure is further achieved by a computer program code which, when executed by a processor, cause the processor to carry out steps of the aforementioned method.

The object of the present disclosure is further achieved by a computer program product comprising computer program code which, when executed by a processor, cause the processor to carry out steps of the aforementioned method.

Still other aspects, features, and advantages of the disclosure are readily apparent from the following detailed description, simply by illustrating a number of particular embodiments and implementations, including the best mode contemplated for carrying out the disclosure. The disclosure is also capable of other and different embodiments, and its several details may be modified in various obvious respects, all without departing from the scope of the disclosure. Accordingly, the drawings and description are to be regarded as illustrative in nature, and not as restrictive.

A more complete appreciation of the present disclosure and many of the attendant aspects thereof will be readily obtained as the same becomes better understood by reference to the following description when considered in connection with the accompanying drawings:
FIG 1 is a flowchart representation of a computer-implemented method for generating a digital human for a virtual environment, in accordance with one or more embodiments of the present disclosure;
FIG 2 is a block diagram representation of a system for generating the digital human for the virtual environment, in accordance with one or more embodiments of the present disclosure;
FIG 3 is an exemplary depiction of application of marker positions to the digital human, in accordance with one or more embodiments of the present disclosure;
FIG 4 is an exemplary depiction of scaling of the digital human, in accordance with one or more embodiments of the present disclosure;
FIG 5 is an exemplary depiction of generation of the digital human corresponding to a human body from a video, in accordance with one or more embodiments of the present disclosure; and
FIG 6 is an exemplary depiction of a digital avatar corresponding of the human body, in accordance with one or more embodiments of the present disclosure.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for generating a digital human for a virtual environment are disclosed herein. In the following description, for the purposes of explanation, numerous specific details are set forth in order to provide a thorough understanding of the embodiments of the disclosure. It is apparent, however, to one skilled in the art that the embodiments of the disclosure may be practiced without these specific details . In other instances, well-known structures and devices are shown in block diagram form in order to avoid unnecessarily obscuring the embodiments of the disclosure.

Conventional methods and systems for -generating the digital human only track three degrees of freedom (only position) and compute inverse kinematics (IK) for rotation. As a result, the conventional methods provide inaccurate motion of the digital human which reduces the efficiency of the digital human which may be used in various applications in the virtual environut.

Unlike to the conventional methods and systems, the proposed method tracks six degrees of freedom of the human joints viz. rotation and position. As a result, the proposed method leads to the generation of a comprehensive digital human which replicated the motion of the human body to a large degree.

Unlike to the conventional methods and systems, the proposed method provides motion capture, sensor measurements, biomechanical modelling, Musculo-skeletal models, finite volume and element simulations, behavioural models, virtual reality avatar modelling, interaction of various digital twins (human-human as well as human-non-human interactions) and haptic feedback between the digital humans and the corresponding human body, augmentation using various technologies are integrated with real-time data transfer capabilities.

Unlike to the conventional methods and systems, the proposed method provides the haptic feedback to align the human body with the corresponding digital human, whereas the conventional methods and systems usually provide a virtual indication regarding alignment.

Unlike to the conventional methods and systems, the proposed method enables analysis of the interactions of the digital human in real-time in the virtual environment, whereas the conventional methods and systems largely limits with only human movement or at most human-non-human interactions.

Unlike to the conventional methods and systems, the proposed method incorporates large language models for better interaction, translation, discussion whereas the conventional methods and systems do not have such a utility.

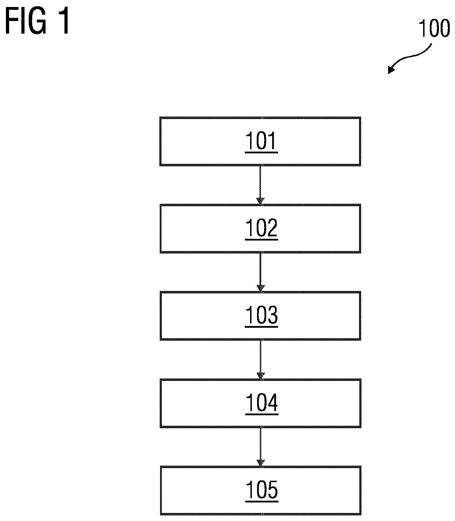

Referring now to FIG 1, illustrated is a flowchart of a method (as represented by reference numeral 100) for generating a digital human for a virtual environment, in accordance with an embodiment of the present disclosure. As used herein, the digital human 504, 604 is a custom sculpted model of a specific human being, or a standardized Jack and Jill avatar based on anthropometric database for practical purposes. The digital human can be for example but not limited to digital twin of the human body 300, an avatar of the human body 300, etc.

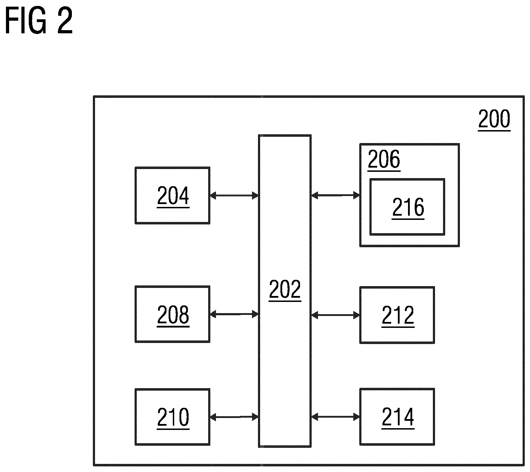

Referring to FIG 2, illustrated is a block diagram of a system 200 for generating the digital human 504, 604 for the virtual environment, in accordance with one or more embodiments of the present disclosure. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, digital versatile disc (DVD), and BluRay disks. Both processors and program code for implementing each aspect of the technology may be centralized or distributed (or a combination thereof) as known to those skilled in the art.

In an example, the system 200 may be embodied as a computer-program product 200 programmed for performing the said purpose. The system 200 may be incorporated in one or more physical packages. By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes a processor 204 and a memory 206. Herein, the memory 206 is communicatively coupled to the processor 204. In an example, the memory 206 may be embodied as a computer readable medium on which program code sections of a computer program are saved, the program code sections being loadable into and/or executable in a system to make the system 200 execute the steps for performing the said purpose.

Generally, as used herein, the term "processor" refers to a computational element that is operable to respond to and processes instructions that drive the system 200. Optionally, the processor includes, but is not limited to, a microprocessor, a microcontroller, a complex instruction set computing (CISC) microprocessor, a reduced instruction set (RISC) microprocessor, an exceptionally long instruction word (VLIW) microprocessor, or any other type of processing circuit. Furthermore, the term "processor" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory 206 may be volatile memory and/or non-volatile memory. The memory 206 may be coupled for communication with the processor 204. The processor 204 may execute instructions and/or code stored in the memory 206. A variety of computer-readable storage media may be stored in and accessed from the memory 206. The memory 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processor 204 has connectivity to the bus 202 to execute instructions and process information stored in the memory 206. The processor 204 may include one or more processing cores with each core configured to perform independently. A multi-core processor enables multiprocessing within a single physical package. Examples of a multi-core processor include two, four, eight, or greater numbers of processing cores. Alternatively, or in addition, the processor 204 may include one or more microprocessors configured in tandem via the bus 202 to enable independent execution of instructions, pipelining, and multithreading. The processor 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that can be queried, analysed, and processed to support various applications and business processes. In the system 200, the database 210 provides mechanisms for storing, retrieving, updating, and deleting data, and typically includes features such as data validation, security, backup and recovery, and data modelling. The database 210 stores the motion capture file for each human body 300, for whom the digital human 504, 604 is generated.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be a display. It is to be understood that, when reference is made in the present disclosure to the term "display" this refers generically either to a display screen on its own or to the screen and an associated housing, drive circuitry and possibly a physical supporting structure, of which all, or part of is provided for displaying information.

In the present system 200, the processor 204 and accompanying components have connectivity to the memory 206 via the bus 202. The memory 206 includes both dynamic memory (e.g., RAM, magnetic disk, writable optical disk, etc.) and static memory (e.g., ROM, CD-ROM, etc.) for storing executable instructions that when executed perform the method steps described herein for generating the digital human for a virtual environment. In particular, the memory 206 includes an interactions management unit 216 to perform steps for managing the domain specific user interactions. Also, in the system 200, the memory 206 may be configured to store the data associated with or generated by the execution of the inventive steps.

Referring to FIGS 1 and 2 in combination, the various steps of the method 100 as described hereinafter may be executed in the system 200, or specifically in the processor 204 of the system 200, for - generating the digital human 504, 604 for the virtual environment. For purposes of the present disclosure, the generating of the digital human 504, 604 for the virtual environment present method 100 is embodied as a creation algorithm for creating the digital human 504, 604. It may be appreciated that although the method 100 is illustrated and described as a sequence of steps, it may be contemplated that various embodiments of the method 100 may be performed in any order or a combination and need not include all of the illustrated steps.

In embodiments of the present disclosure, at step 101, the method 100 includes capturing motion of the human body 300 through multiple inputs associated with the human body 300. Here, the human body 300 is the only real-life object and other parts of the system 200 are digital blocks. The human body 300 is a source of inputs and is also a receiver of data through haptic feedback. The haptic feedback is used for calibration, posture correction, posture/task feedback from the system 200. The multiple inputs include various categories of inputs which include but are not limited to physical inputs, biological inputs, and other inputs. The physical inputs can be multi modal through motion capture technology. The motion capturing is the process of recording the movement of the human body 300. The term motion capturing can also be called for example as performance capture, match moving, etc. The motion can be captured through various sources such as for example but not limited to body suits, image sensors (for example camera), immersive experience devices (such as for example virtual reality (VR) headsets), recorded videos etc. The biological inputs are captured using biomedical sensors. The biomedical sensors can be for example such as SpO₂, heart rate sensors, blood pressure sensors, electrocardiogram (ECG), etc. wearable devices like smart watches, non-invasive bands, or medical devices such as ECG, EMG, pacemakers, etc. attached to the human body 300 in a controlled environment.

In embodiments of the present disclosure, at step 102, the method 100 includes generating a motion capture (also called as mo-cap or mocap) file which includes multiple marker positions 302 associated with the motion of the human body 300 based on the plurality of inputs. The motion capture file is a documentation that is generated for each human body 300 for which the corresponding digital human 504, 604 needs to be generated by the system 200. The motion capture file will include details of the multiple marker positions 302 related to the captured motion of the human body 300. The motion captured using the multiple inputs is used to get the multiple marker positions 302 on the human body 300 and then generate the motion capture file. The motion capture files have low-level formats, i.e. formats close to the motion produced by the human body 300.

The motion capture file may additionally include estimates of the various parameters associated with the human body 300 for determining the digital human 504, 604. The various parameters associated with the human body 300 can be for example but not limited to height, body frame, weight, posture, etc. The motion capture device can be for example but not limited to a camera, an infrared sensor, etc. The motion capture device captures the various parameters associated with the human body 300 and generates the motion capture file which is stored in the database 210.

In embodiments of the present disclosure, at step 103, the method 100 includes performing a physical simulation and biological simulation for the digital human 504, 604 using the motion capture file. The physical simulation and biological simulation include a biomechanical simulation, and Musculo-skeletal modelling, and can further include but are not limited to behavioural models, finite element models, etc. The biomechanical simulation is performed to mimic movements of the human body 300 and synchronize the movements with the captured motion while performing a physical task. The Musculo-skeletal modelling is performed to mimic the human's muscular capabilities which will provide information about stresses/strains in muscles and forces/moments in the joints while performing the physical task. The Musculo-skeletal modelling also assesses the interaction between the digital human 504, 604 and an object in the digital environment. This captures the forces encountered by the digital human 504, 604 while performing a physical task. The Musculo-skeletal modelling also assesses the fatigue the human body 300 undergoes while performing one or more tasks repetitively or for extended duration.

Further, finite element models are used to perform structural analysis of bones, muscles, blood vessels, tissues etc. Finite volume models are used to perform fluid flow analysis of blood, air through the human body 300. The behavioural models are used to predict behaviours of the digital human 504, 604 based on internal states (simulation results from above models), external stimuli interaction with other twins, models in virtual world), and decision-making processes (task at hand where the digital human 504, 604 is applied). The behavioural models replace the human being 300 when disconnected from the metaverse environment. The physical simulation and biological simulation models can be built as modular stacks that are made active or dormant depending on the application of the digital human 504, 604. For example, the behaviour models can be turned off for active digital humans 504, 604 and turned on for semi-active digital humans 504, 604.

Furthermore, the haptic feedback is again incorporated to transfer feedback about the physical states from the digital human 504, 604 to the human body 300. Thus the "executable" digital humans 504, 604 is created. The Haptic feedback is controlled vibrations patterns and waveforms to provide information about a sensation experienced by the digital humans 504, 604 back to the human being 300. The sensations cane includes for example but not limited to: 'jumps', 'bumps', 'knocks', and 'tap' of one's hand or fingers, etc.

In embodiments of the present disclosure, at step 104, the method 100 includes superimposing the physical simulation and the biological simulation on the digital human 504, 604 corresponding to the human body 300. The interactions management unit 216 then uses the digital human 504, 604 to represents and corresponds to the human being 300. The simulations output from simulator models such as physical movements, fatigued muscles or joints is superimposed onto the digital human 504, 604. The digital human 504, 604 can be for example but not limited to: a digital twin of the human body and an avatar of the human body 300. The term 'avatar' as used herein refers to a digital representation of the human body 300 that is manipulable, by a human operator, using an input device. In an embodiment, the digital human 504, 604 is a Computer-Aided Design (CAD) model. Multiple digital humans 504, 604 which includes the digital human 504, 604 and the other digital humans with which the digital human 504, 604interacts in the virtual environment are stored in the database 210 of the system 200 and the corresponding digital humans 504, 604 are used based on the human body 300. Then the physical simulation and the biological simulation obtained is superimposed on the digital humans 504, 604.

Various attributes may be considered for determining the physical simulation and the biological simulation of the digital humans 504, 604. The attributes may be in at least one of the categories such as for example but not limited to physical attributes, physiological attributes, perceptual performance attributes, cognitive performance attributes, personality characteristics attributes, emotional state attributes, etc. The physiological attributes can include anthropometric attributes, biomechanics attributes, times required for task completion, eye movements, etc. The physiological attributes can include measures such as heart rate, heart rate variability, galvanic skin response, muscle tension, blood oxygen level, brain electrophysiologic signals, pupillometry, blink rates and timing, peripheral blood flow, and gastronomical activity. However, these are intended to correlate to higher level physiological measures such as fatigue, circadian cycle, alertness level, and activation or engagement level. The perceptual performance attributes can include auditory sensitivity, visual sensitivity, colour sensitivity, contrast sensitivity, pressure sensitivity, pain thresholds, temperature sensitivity, etc. The cognitive performance attributes can include knowledge, skills, abilities or aptitudes, workload level, situation awareness, decision-making abilities, etc. The personality characteristics attributes can include personality type, propensity to trust, and propensity towards suspicion. The emotional state attributes can include feelings experienced by the user within their current circumstance, including fear, and anxiety.

In embodiments of the present disclosure, at step 105, the method 100 includes displaying the digital human 504, 604 in the virtual environment. The digital human 504, 604 achieved in the step 104 is visualized in the virtual environment using the digital avatar. This virtual environment can be for example but not limited to a virtual reality environment (VR), augmented reality environment (AR), mixed reality environment (MR), metaverse environment, etc. Metaverse is a height universe with shared, 3D virtual spaces where virtual assets can be owned, placed, and interacted with. It also allows different users to interact with each other in the collaborative environment. These virtual assets can be simple entities like chair or table, or complex entities like industrial machinery. The virtual environment may be made available through a web interface through WebXR technologies which is useful for remote monitoring of the digital human 504, 604 by their owners, stakeholders, physicians, coaches, etc. The digital avatar of the digital human 504, 604 can be a custom sculpted model of a human being 300, or a standardized Jack and Jill avatar based on anthropometric database for practical purposes. Further, the interactions management unit 216 includes AI/ML models, and large language models to make the system 200, explainable, display/readout observations provide their interpretations, offer translations between the digital humans 504, 604 or their owners from different regions in an interactive lucid manner in the virtual environment, etc.

The method 100 further includes providing non-human digital objects and multiple digital humans504, 604 in the virtual environment along with the digital human 504, 604. The interactions management unit 216 imports multiple digital humans 504, 604 in addition to other one non-human digital objects. They can collaboratively work on designing or re-designing one or more products or processes, discuss strategies, make decisions in the virtual environment. The method 100 also allows multiple interactions between the digital humans 504, 604 and the non-human digital object in the virtual environment. The interactions can be performing a set of actions by the digital human 504, 604 on the non-human digital object in the virtual environment. The set of actions can be for example but not limited to, playing a sport, moving a heavy body, lifting an object, throwing the object, perform a pedaling motion in relation to a virtual model of the non-human digital object such as a bicycle, etc. The interaction between the digital humans 504, 604 and the non-human digital object is provided only in the metaverse environment which provides the advantage of immersiveness, interactiveness and collaboration. In an embodiment, interactions between the digital human 504, 604 and the non-human digital object are simulated using low-fidelity simulation models (e.g., models derived using Model Order Reduction (MOR)), high-fidelity simulation models (e.g., three-dimensional models, finite-element models, Computational Fluid Dynamics models) or a combination thereof, depending on the complexity of the interactions to be performed.

For example, the non-human digital object can be a wooden crate and the action can be the digital human 504, 604 lifting the wooden crate. In another example, there may be multiple digital humans 504, 604 involved in pushing a large truck (the non-human object). In yet another example, there may be two digital humans 504, 604 wrestling with each other. In each of the above-mentioned examples, there are forces experienced by the muscles and joints of the digital humans 504, 604 involved in performing the actions. Further, the haptic feedback is again incorporated to transfer feedback from the digital human 504, 604 to the real human beings 300. Furthermore, the multiple interactions between the digital humans 504, 604 and the non-human digital object in the virtual environment or the multiple digital humans 504, 604, in the virtual environment is displayed on a screen of the system 200.

The method 100 further includes detecting the Musculo-skeletal force experienced by the digital human 504, 604 during the multiple interactions with the non-human digital object and comparing it with a predefined Musculo-skeletal force threshold. When the Musculo-skeletal force does not match the predefined Musculo-skeletal force threshold, modifying the interactions between the non-human digital object and the digital human 504, 604 to match the predefined Musculo-skeletal force threshold. To modify the interactions between the non-human digital object and the digital human 504, 604 initially the haptic feedback is determined based on the Musculo-skeletal force experienced by the digital human 504, 604 during the interactions with the non-human digital object and send the haptic feedback to the human body 300. Once the human body 300 receives the haptic feedback then the interaction is automatically modified.

For example, consider that the digital human 504, 604 in the virtual environment pulls a chair. However, the chair does not move as the Musculo-skeletal force does not meet the predefined Musculo-skeletal force threshold. Then the haptic feedback is sent to the real human being 300 regarding the forces experienced by the multiple muscles and joints of the digital human 504, 604. Based on the haptic feedback, the real human being 300 will exert more force in pulling the chair which is simulated and superimposed on the digital human 504, 604. Which then leads to the digital human 504, 604 pulling the chair in the virtual environment. Finally, the modified interactions are displayed on the screen of the system 200.

The method 100 further includes introducing multiple digital humans 504, 604 in the virtual environment and transferring the forces between them at appropriate points of contacts. Further, allowing interactions between the multiple digital humans 504, 604 in the virtual environment based on the transferred forces. Here, the appropriate points of contacts are determined based on the marker positions 302 from the motion capture file. For example, group athletics which includes performing stunts.

Therefore, the proposed solution provides the system 200 which incorporates motion capture, sensor measurements, biomechanical modelling, Musculo-skeletal models, finite volume and element simulations, behavioural models, virtual reality avatar modelling, interaction of various digital humans 504, 604 and digital human 504, 604 with non-human objects and haptic feedback between the digital human 504, 604 and their real counterparts, augmentation using VR/AR/MR/WebXR concepts integrated with real-time data transfer capabilities. Also, the proposed solution tracks 6 degrees of freedom of human joints viz. rotation and position, whereas the conventional methods provide only three degrees of freedom (only position) and compute inverse kinematics (IK) for rotation. This leads to inaccurate motion of the digital human. Also, the proposed solution makes use of haptic feedback to align the real human 300 with the digital counterpart, whereas the conventional methods usually provide a virtual indication regarding alignment. Further, the proposed solution incorporates large language models for better interaction, translation, discussion whereas existing approaches do not have such utility.

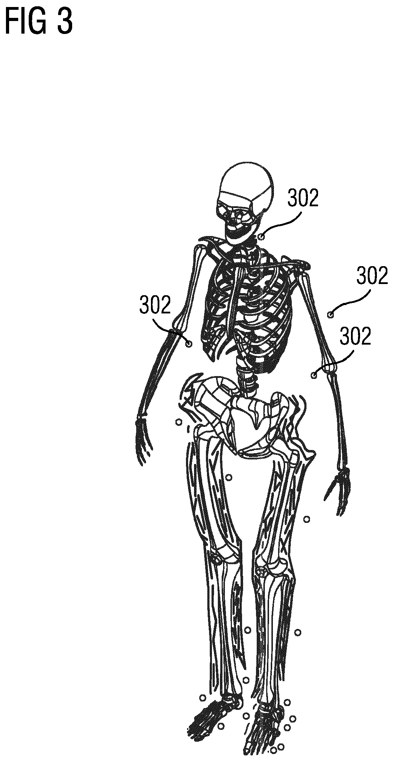

FIG 3 is an exemplary depiction of the marker positions 302 in the digital human 504, 604, in accordance with one or more embodiments of the present disclosure. Referring to the FIG. 3, the multiple marker positions 302 associated with the motion of the human body are indicated on the digital human 504, 604. The marker positions 302 indicate angles of motion of each part of the human body 300 during the motion. The marker positions 302 are then recorded in the motion capture file, which is mapped to the digital human 504, 604.

For example, consider the characters controlled in a scenario of video games. Each of the characters may be associated and controlled with a specific human body. Further each character would be represented by digital avatars. These digital avatars can be used to represent the corresponding human bodies in various scenarios in the virtual environment such as to shop, socialize, learn, and work in the virtual environment.

The multiple marker positions 302 are provided throughout the human body 300 based on the motion of the human body 300. The multiple marker positions 302 identify various landmarks indicating the angles of motion in the human body 300 and the motion of each body segment of the human body 300. The multiple marker positions 302 are provided near each joint to identify the motion by the positions or angles between the multiple marker positions 302. The system 200 produce data with three degrees of freedom for each of the multiple marker positions 302, and rotational information is inferred from the relative orientation of three or more of the multiple marker positions 302, for instance shoulder, elbow and wrist markers providing the angle of the elbow. The forces experienced by various muscles of the human body 300 at various points on the human body 300 during the motion is indicated through the multiple marker positions 302.

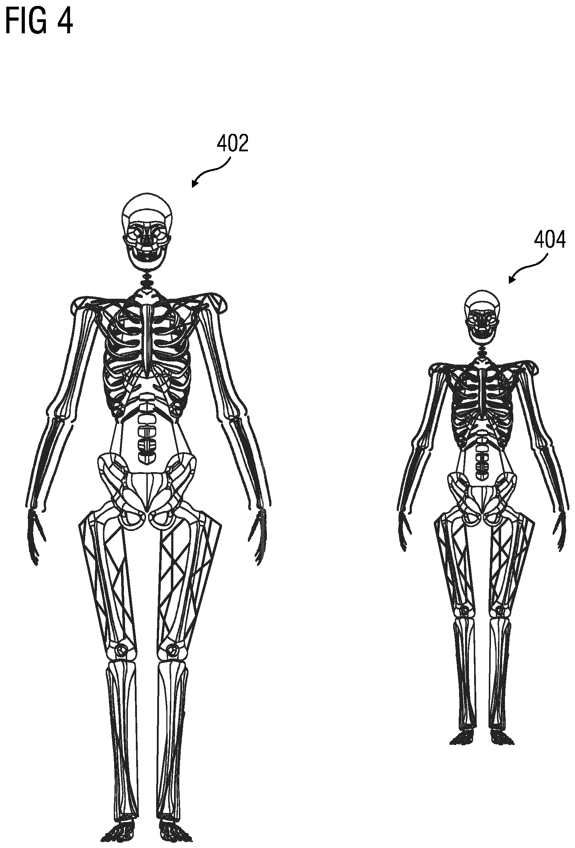

FIG 4 is an exemplary depiction of scaling of the digital human 504, 604, in accordance with one or more embodiments of the present disclosure. Referring to the FIG. 4, the digital human 504, 604 which is generated corresponding to the human body 300 can be scaled with respect to the human body 300. At 402, a scaled-up version of the digital human 504, 604 is provided and at 404, a scaled-down version of the digital human 504, 604 is provided. The scaling is performed based on the physical simulation and the biological simulation results with respect to the human body 300 and keeping the simulations intact.

Therefore, the proposed solution enables the user to not only create the digital human 504, 604 but also to scale the created digital human 504, 604 to various sizes and shapes based on the user requirement. Therefore, the scalable digital human 504, 604 finds place in multiple applications such as product designing where the product needs to be customized for a specific user. Further, the digital human 504, 604 generated with specific dimensions may be stored in the system 200 and can be retrieved when it matches with the human body 300 for product customization.

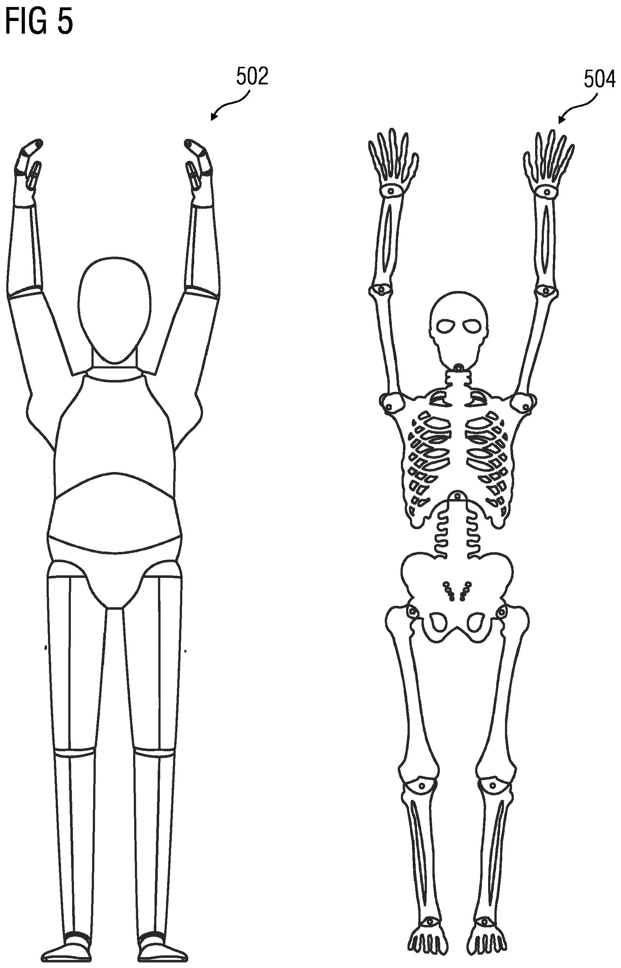

FIG 5 is an exemplary depiction of the generation of the digital human 504 corresponding to the human body 502 from a video, in accordance with one or more embodiments of the present disclosure. Referring to the FIG. 5, the human body 502 which is under motion is being tracked in the video to determine the motion features. The motion features of the human body 502 are then drawn into the motion capture file which will include the markers 302 indicating the various positions of the human body 502 during the motion. Further, the motion capture file is provided to the interactions management unit 216 to determine the biomechanical simulation and the Musculo-skeletal simulation. The biomechanical simulation and the Musculo-skeletal simulation are mapped to the digital human 504 and provided as shown in the FIG. 5. Here, the digital human 504 is a human digital skeleton 504.

Here, it may be noted that the motion of the human body 502 is captured from a pre-recorded video, however the motion can be captured in real-time based on the real-time activities of the human body 502. Therefore, the proposed solution is not only able to generate the digital human 504 by capturing the real-time motion of the human body 502 by various means such as for example but not limited to using a body suit, etc, but also can generate the mocap file based on a video input or successive image frame input. As a result, in various applications the video may be used as inputs to determine the mocap file and generate the digital human 504.

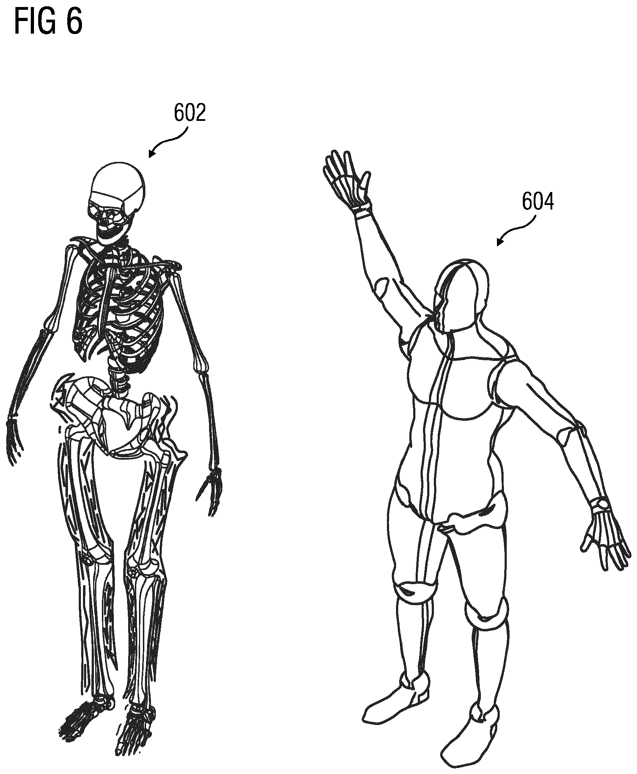

FIG 6 is an exemplary depiction of a digital avatar 604 corresponding of the human body 602, in accordance with one or more embodiments of the present disclosure. Referring to the FIG. 6, a cuboidal block based digital avatar 604 is provided. The digital avatar 604 is the digital human 604 to which the simulation results from the biomechanical simulation and the Musculo-skeletal simulation are integrated to provide the features of the human body 602. Further, the digital human 604 can be provided in any other form such as for example, a digital version of the human body 602, etc. and is not limited to the cuboidal block based digital avatar 604.

Therefore, the proposed solution provides an approach where a human avatar is allowed to interact with the product design and send a haptic feedback to the real human for an immersive experience in product design optimization. Also, all the disciplines interact with the product design in a collaborative and the immersive environment in real-time reducing the time required for the product designing process. As a result, the proposed solution provides enhanced efficiency in designing the product at the same time drastically reducing the time required to get the product to the market.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning of of the claims are to be considered within their scope.

## Claims

1. A method (100) for generating a digital human (504, 604) for a virtual environment, wherein the method (100) comprises:
capturing (101) motion of a human body (502, 602) through a plurality of inputs associated with the human body (502, 602);
generating (102) a motion capture file comprising a plurality of marker positions (302) associated with the motion of the human body (502, 602) based on the plurality of inputs;
performing (103) a biomechanical simulation and a Musculo-skeletal simulation for the digital human (504, 604) using the motion capture file, wherein the biomechanical simulation is performed to mimic movements of the human body (502, 602) and synchronize the movements with the captured motion while performing a physical task, and the Musculo-skeletal modelling is performed to mimic the human's muscular capabilities thereby providing information about stresses and/or strains in muscles and forces and/or moments in the joints while performing the physical task;
superimposing (104) simulation results from the biomechanical simulation and the Musculo-skeletal simulation on the digital human (504, 604) corresponding to the human body (502, 602); and
displaying (105) the digital human (504, 604) in the virtual environment.

2. The method (100) as claimed in claim 1, further comprising:
providing at least one non-human digital object and at least one another digital human in the virtual environment;
allowing a plurality of interactions between the digital human (504, 604) with at least one of: the non-human digital object and the another digital human, in the virtual environment; and
displaying the plurality of interactions between the digital human (504, 604) with at least one of: the non-human digital object and the another digital human in the virtual environment.

3. The method (100) as claimed in claim 2, further comprising:
detecting at least one Musculo-skeletal force experienced by the digital human (504, 604) during the plurality of interactions with the at least one non-human digital object;
determining that the detected at least one Musculo-skeletal force does not match a predefined Musculo-skeletal force threshold;
modifying the plurality of interactions between the at least one non-human digital object and the digital human (504, 604) to match the predefined Musculo-skeletal force threshold; and
displaying the modified plurality of interactions between the at least one non-human digital object and the digital human (504, 604) in the virtual environment.

4. The method (100) according to claim 3, wherein modifying the plurality of interactions between the at least one non-human digital object and the digital human (504, 604) to match the predefined Musculo-skeletal force threshold comprises:
determining a haptic feedback based on the at least one Musculo-skeletal force experienced by the digital human (504, 604) during the plurality of interactions with the at least one non-human digital object;
sending the haptic feedback to the human body (502, 602); and
modifying the plurality of interactions between the at least one non-human digital object and the digital human (504, 604) to match the predefined Musculo-skeletal force threshold, based on the haptic feedback.

5. The method (100) as claimed in claim 1 to 4, further comprising:
providing at least one another digital human (504, 604) in the virtual environment along with the digital human (504, 604);
transferring forces between the digital human (504, 604) and the at least one another digital human (504, 604) at appropriate points of contacts; and
allowing the plurality of interactions between digital human (504, 604) and the at least one another digital human (504, 604) in the virtual environment based on the transferred forces.

6. The method (100) as claimed in claim 5, wherein the appropriate points of contacts is determined based on the plurality of marker positions (302) from the motion capture file.

7. The method (100) according to claim 1 to 6, wherein the digital human (504, 604) comprises one of a digital twin of the human body (502, 602), and an avatar (604) of the human body (502, 602).

8. The method (100) according to claim 2, wherein the plurality of interactions between the digital human (504, 604) and the at least one non-human digital object in the virtual environment comprises performing a set of actions by the digital human (504, 604) on the non-human digital object in the virtual environment.

9. The method (100) according to any one of claims 1 to 8, wherein the Musculo-skeletal modelling is further configured for assessing the interaction between the digital human (504, 604) and an object in the digital environment to capture the forces encountered by the digital human (504, 604) while performing the physical task and/or to assess a fatigue the human body (502, 602) undergoes while performing the physical task repetitively or for an extended duration.

10. The method (100) according to any one of claims 1 to 9, further comprising performing a structural analysis of bones, muscles, blood vessels, and/or tissues using finite element models to perform fluid flow analysis of blood and air through the human body (502, 602).

11. The method (100) according to any one of claims 1 to 10, further comprising predicting behaviours of the digital human (504, 604) based on simulation results from behavioural models based on internal states, external stimuli interaction with digital twins of other digital humans (504, 604), models in virtual world, and decision-making processes related to a task to be performed by digital human (504, 604), when a human being is disconnected from the virtual environment.

12. The method (100) according to any one of claims 1 to 11, wherein the step of capturing (101) motion of a human body (502, 602) comprises tracking the human body (502) which is under motion in a video to determine the motion features.

13. The method (100) according to any one of claims 1 to 12, wherein the marker positions (302) identify landmarks near each joint of the human body (502, 602) to identify the motion by the positions or angles between the multiple marker positions (302), wherein first data with three degrees of freedom for each of the multiple marker positions (302) is produced, and rotational information is inferred from the relative orientation of three or more of the plurality of marker positions (302).

14. A system (200) for generating a digital human (400) for a virtual environment, the system (200) comprising:
a processor (204); and
a memory (206) coupled to the processor (204), wherein the memory (206) comprises instructions which, when executed by the processor (204), configures the processor (204) to perform method steps according to any of the claims 1 to 13.

15. A computer program product, comprising computer program code which, when executed by a processor (204), cause the processor (204) to carry out the method (100) of any one of the claims 1 to 13.

## Patentansprüche

1. Verfahren (100) zum Generieren eines digitalen Menschen (504, 604) für eine virtuelle Umgebung, wobei das Verfahren (100) Folgendes umfasst:
Erfassen (101) einer Bewegung eines menschlichen Körpers (502, 602) durch mehrere mit dem menschlichen Körper (502, 602) assoziierte Eingaben;
Generieren (102) einer Bewegungserfassungsdatei, die mehrere mit der Bewegung des menschlichen Körpers (502, 602) assoziierte Markerpositionen (302) umfasst, basierend auf den mehreren Eingaben;
Durchführen (103) einer biomechanischen Simulation und einer muskuloskeletalen Simulation für den digitalen Menschen (504, 604) unter Verwendung der Bewegungserfassungsdatei, wobei die biomechanische Simulation durchgeführt wird, um während eines Durchführens einer körperlichen Aufgabe Bewegungen des menschlichen Körpers (502, 602) nachzubilden und die Bewegungen mit der erfassten Bewegung zu synchronisieren, und die muskuloskeletale Modellierung durchgeführt wird, um die muskulären Fähigkeiten des Menschen nachzubilden, wodurch Informationen über Anspannungen und/oder Dehnungen in Muskeln und Kräfte und/oder Momente in den Gelenken während des Durchführens der körperlichen Aufgabe bereitgestellt werden;
Überlagern (104) von Simulationsergebnissen aus der biomechanischen Simulation und der muskuloskeletalen Simulation auf den dem menschlichen Körper (502, 602) entsprechenden digitalen Menschen (504, 604); und
Anzeigen (105) des digitalen Menschen (504, 604) in der virtuellen Umgebung.

2. Verfahren (100) nach Anspruch 1, ferner umfassend:
Bereitstellen mindestens eines nicht-menschlichen digitalen Objekts und mindestens eines anderen digitalen Menschen in der virtuellen Umgebung;
Ermöglichen mehrerer Interaktionen zwischen dem digitalen Menschen (504, 604) mit mindestens einem von: dem nicht-menschlichen digitalen Objekt und dem anderen digitalen Menschen in der virtuellen Umgebung; und
Anzeigen der mehreren Interaktionen zwischen dem digitalen Menschen (504, 604) mit mindestens einem von: dem nicht-menschlichen digitalen Objekt und dem anderen digitalen Menschen in der virtuellen Umgebung.

3. Verfahren (100) nach Anspruch 2, ferner umfassend:
Detektieren mindestens einer muskuloskeletalen Kraft, die der digitale Mensch (504, 604) während der mehreren Interaktionen mit dem mindestens einen nicht-menschlichen digitalen Objekt erfährt;
Bestimmen, dass die detektierte mindestens eine muskuloskeletale Kraft nicht mit einem vordefinierten muskuloskeletalen Kraftschwellenwert übereinstimmt;
Modifizieren der mehreren Interaktionen zwischen dem mindestens einen nicht-menschlichen digitalen Objekt und dem digitalen Menschen (504, 604) so, dass sie mit dem vordefinierten muskuloskeletalen Kraftschwellenwert übereinstimmen; und
Anzeigen der modifizierten mehreren Interaktionen zwischen dem mindestens einen nicht-menschlichen digitalen Objekt und dem digitalen Menschen (504, 604) in der virtuellen Umgebung.

4. Verfahren (100) nach Anspruch 3, wobei das Modifizieren der mehreren Interaktionen zwischen dem mindestens einen nicht-menschlichen digitalen Objekt und dem digitalen Menschen (504, 604) so, dass sie mit dem vordefinierten muskuloskeletalen Kraftschwellenwert übereinstimmen, Folgendes umfasst:
Bestimmen einer haptischen Rückmeldung basierend auf der mindestens einen muskuloskeletalen Kraft, die der digitale Mensch (504, 604) während der mehreren Interaktionen mit dem mindestens einen nicht-menschlichen digitalen Objekt erfährt;
Senden der haptischen Rückmeldung an den menschlichen Körper (502, 602); und
Modifizieren der mehreren Interaktionen zwischen dem mindestens einen nicht-menschlichen digitalen Objekt und dem digitalen Menschen (504, 604) so, dass sie mit dem vordefinierten muskuloskeletalen Kraftschwellenwert übereinstimmen, basierend auf der haptischen Rückmeldung.

5. Verfahren (100) nach Anspruch 1 bis 4, ferner umfassend:
Bereitstellen mindestens eines anderen digitalen Menschen (504, 604) in der virtuellen Umgebung zusammen mit dem digitalen Menschen (504, 604);
Übertragen von Kräften zwischen dem digitalen Menschen (504, 604) und dem mindestens einen anderen digitalen Menschen (504, 604) an geeigneten Kontaktpunkten; und
Ermöglichen der mehreren Interaktionen zwischen dem digitalen Menschen (504, 604) und dem mindestens einen anderen digitalen Menschen (504, 604) in der virtuellen Umgebung basierend auf den übertragenen Kräften.

6. Verfahren (100) nach Anspruch 5, wobei die geeigneten Kontaktpunkte basierend auf den mehreren Markerpositionen (302) aus der Bewegungserfassungsdatei bestimmt werden.

7. Verfahren (100) nach Anspruch 1 bis 6, wobei der digitale Mensch (504, 604) einen von einem digitalen Zwilling des menschlichen Körpers (502, 602) und einem Avatar (604) des menschlichen Körpers (502, 602) umfasst.

8. Verfahren (100) nach Anspruch 2, wobei die mehreren Interaktionen zwischen dem digitalen Menschen (504, 604) und dem mindestens einen nicht-menschlichen digitalen Objekt in der virtuellen Umgebung Durchführen eines Satzes von Aktionen durch den digitalen Menschen (504, 604) an dem nicht-menschlichen digitalen Objekt in der virtuellen Umgebung umfassen.

9. Verfahren (100) nach einem der Ansprüche 1 bis 8, wobei die muskuloskeletale Modellierung ferner dazu ausgelegt ist, die Interaktion zwischen dem digitalen Menschen (504, 604) und einem Objekt in der digitalen Umgebung zu bewerten, um die Kräfte zu erfassen, denen der digitale Mensch (504, 604) während des Durchführens der körperlichen Aufgabe ausgesetzt ist, und/oder um eine Ermüdung zu bewerten, der der menschliche Körper (502, 602) während eines wiederholten oder länger andauernden Durchführens der körperlichen Aufgabe unterliegt.

10. Verfahren (100) nach einem der Ansprüche 1 bis 9, ferner umfassend Durchführen einer Strukturanalyse von Knochen, Muskeln, Blutgefäßen und/oder Geweben unter Verwendung von Finite-Elemente-Modellen, um eine Fluidströmungsanalyse von Blut und Luft durch den menschlichen Körper (502, 602) durchzuführen.

11. Verfahren (100) nach einem der Ansprüche 1 bis 10, ferner umfassend Vorhersagen von Verhaltensweisen des digitalen Menschen (504, 604) basierend auf Simulationsergebnissen aus Verhaltensmodellen basierend auf internen Zuständen, einer externen Reizinteraktion mit digitalen Zwillingen anderer digitaler Menschen (504, 604), Modellen in der virtuellen Welt und Entscheidungsfindungsprozessen in Bezug auf eine durch den digitalen Menschen (504, 604) durchzuführende Aufgabe, wenn ein Mensch von der virtuellen Umgebung getrennt wird.

12. Verfahren (100) nach einem der Ansprüche 1 bis 11, wobei der Schritt des Erfassens (101) einer Bewegung eines menschlichen Körpers (502, 602) Nachverfolgen des menschlichen Körpers (502), der sich in Bewegung befindet, in einem Video, um die Bewegungsmerkmale zu bestimmen, umfasst.

13. Verfahren (100) nach einem der Ansprüche 1 bis 12, wobei die Markerpositionen (302) Landmarken in der Nähe jedes Gelenks des menschlichen Körpers (502, 602) identifizieren, um die Bewegung durch die Positionen oder Winkel zwischen den mehreren Markerpositionen (302) zu identifizieren, wobei erste Daten mit drei Freiheitsgraden für jede der mehreren Markerpositionen (302) erzeugt werden und Rotationsinformationen aus der relativen Orientierung von drei oder mehr der mehreren Markerpositionen (302) abgeleitet werden.

14. System (200) zum Generieren eines digitalen Menschen (400) für eine virtuelle Umgebung, wobei das System (200) Folgendes umfasst:
einen Prozessor (204); und
einen Speicher (206), der mit dem Prozessor (204) gekoppelt ist, wobei der Speicher (206) Anweisungen umfasst, die, wenn sie durch den Prozessor (204) ausgeführt werden, den Prozessor (204) dazu auslegen, Verfahrensschritte nach einem der Ansprüche 1 bis 13 durchzuführen.

15. Computerprogrammprodukt, umfassend Computerprogrammcode, der, wenn er durch einen Prozessor (204) ausgeführt wird, den Prozessor (204) dazu veranlasst, das Verfahren (100) nach einem der Ansprüche 1 bis 13 auszuführen.

## Revendications

1. Procédé (100) de génération d'un humain numérique (504, 604) pour un environnement virtuel, le procédé (100) comprenant les étapes suivantes :
capturer (101) le mouvement d'un corps humain (502, 602) par une pluralité d'entrées associées au corps humain (502, 602) ;
générer (102) un fichier de capture de mouvement comprenant une pluralité de positions de marqueurs (302) associées au mouvement du corps humain (502, 602) sur la base de la pluralité d'entrées ;
effectuer (103) une simulation biomécanique et une simulation musculosquelettique pour l'humain numérique (504, 604) au moyen du fichier de capture de mouvement, la simulation biomécanique étant effectuée pour imiter les mouvements du corps humain (502, 602) et synchroniser les mouvements avec le mouvement capturé tout en effectuant une tâche physique, et la modélisation musculosquelettique étant effectuée pour imiter les capacités musculaires de l'humain, fournissant ainsi des informations sur les contraintes et/ou les tensions dans les muscles et les forces et/ou les moments dans les articulations pendant l'exécution de la tâche physique ;
superposer (104) des résultats de simulation de la simulation biomécanique et de la simulation musculosquelettique sur l'humain numérique (504, 604) correspondant au corps humain (502, 602) ; et
afficher (105) l'humain numérique (504, 604) dans l'environnement virtuel.

2. Procédé (100) tel que revendiqué dans la revendication 1, comprenant en outre les étapes suivantes :
apporter au moins un objet numérique non-humain et au moins un autre humain numérique dans l'environnement virtuel ;
permettre une pluralité d'interactions entre l'humain numérique (504, 604) et au moins l'un parmi : l'objet numérique non-humain et l'autre humain numérique, dans l'environnement virtuel ; et
afficher la pluralité d'interactions entre l'humain numérique (504, 604) et au moins l'un parmi : l'objet numérique non humain et l'autre humain numérique dans l'environnement virtuel.

3. Procédé (100) tel que revendiqué dans la revendication 2, comprenant en outre les étapes suivantes :
détecter au moins une force musculosquelettique subie par l'humain numérique (504, 604) lors de la pluralité d'interactions avec l'au moins un objet numérique non humain ;
déterminer que l'au moins une force musculosquelettique détectée ne correspond pas à un seuil de force musculosquelettique prédéfini ;
modifier la pluralité d'interactions entre l'au moins un objet numérique non humain et l'humain numérique (504, 604) afin de correspondre au seuil de force musculosquelettique prédéfini ; et
afficher la pluralité modifiée d'interactions entre l'au moins un objet numérique non-humain et l'humain numérique (504, 604) dans l'environnement virtuel.

4. Procédé (100) selon la revendication 3, dans lequel la modification de la pluralité d'interactions entre l'au moins un objet numérique non humain et l'humain numérique (504, 604) pour correspondre au seuil de force musculosquelettique prédéfini comprend les étapes suivantes :
déterminer un retour haptique sur la base de l'au moins une force musculosquelettique subie par l'humain numérique (504, 604) lors de la pluralité d'interactions avec l'au moins un objet numérique non humain ;
envoyer le retour haptique au corps humain (502, 602) ; et
modifier la pluralité d'interactions entre l'au moins un objet numérique non humain et l'humain numérique (504, 604) pour correspondre au seuil de force musculosquelettique prédéfini, sur la base du retour haptique.

5. Procédé (100) tel que revendiqué dans les revendications 1 à 4, comprenant en outre les étapes suivantes :
apporter, conjointement à l'humain numérique (504, 604), au moins un autre humain numérique (504, 604) dans l'environnement virtuel ;
transférer des forces entre l'humain numérique (504, 604) et l'au moins un autre humain numérique (504, 604) au niveau de points de contact appropriés ; et
permettre la pluralité d'interactions entre l'humain numérique (504, 604) et l'au moins un autre humain numérique (504, 604) dans l'environnement virtuel sur la base des forces transférées.

6. Procédé (100) tel que revendiqué dans la revendication 5, dans lequel les points de contact appropriés sont déterminés sur la base de la pluralité de positions de marqueurs (302) à partir du fichier de capture de mouvement.

7. Procédé (100) selon les revendications 1 à 6, dans lequel l'humain numérique (504, 604) comprend l'un d'un jumeau numérique du corps humain (502, 602), et d'un avatar (604) du corps humain (502, 602).

8. Procédé (100) selon la revendication 2, dans lequel la pluralité d'interactions entre l'humain numérique (504, 604) et l'au moins un objet numérique non humain dans l'environnement virtuel comprend l'exécution d'un ensemble d'actions par l'humain numérique (504, 604) sur l'objet numérique non humain dans l'environnement virtuel.

9. Procédé (100) selon l'une quelconque des revendications 1 à 8, dans lequel la modélisation musculosquelettique est en outre configurée pour évaluer l'interaction entre l'humain numérique (504, 604) et un objet dans l'environnement numérique pour capturer les forces rencontrées par l'humain numérique (504, 604) pendant l'exécution de la tâche physique et/ou pour évaluer une fatigue subie par le corps humain (502, 602) pendant l'exécution de la tâche physique de manière répétée ou pendant une durée étendue.

10. Procédé (100) selon l'une quelconque des revendications 1 à 9, comprenant en outre de réaliser une analyse structurelle des os, des muscles, des vaisseaux sanguins et/ou des tissus en utilisant des modèles par éléments finis afin de réaliser une analyse d'écoulement fluidique du sang et de l'air à travers le corps humain (502, 602).

11. Procédé (100) selon l'une quelconque des revendications 1 à 10, comprenant en outre de prédire des comportements de l'humain numérique (504, 604) sur la base de résultats de simulation à partir de modèles comportementaux basés sur des états internes, une interaction de stimuli externes avec des jumeaux numériques d'autres humains numériques (504, 604), des modèles dans le monde virtuel, et des processus décisionnels liés à une tâche à exécuter par un humain numérique (504, 604), lorsqu'un être humain est déconnecté de l'environnement virtuel.

12. Procédé (100) selon l'une quelconque des revendications 1 à 11, dans lequel l'étape de capture (101) du mouvement d'un corps humain (502, 602) comprend de suivre le corps humain (502) qui est en mouvement dans une vidéo pour déterminer les caractéristiques de mouvement.

13. Procédé (100) selon l'une quelconque des revendications 1 à 12, dans lequel les positions de marqueurs (302) identifient des repères près de chaque articulation du corps humain (502, 602) pour identifier le mouvement par les positions ou les angles entre les multiples positions de marqueurs (302), où des premières données avec trois degrés de liberté pour chacune des multiples positions de marqueurs (302) sont produites, et des informations de rotation sont déduites de l'orientation relative de trois positions de marqueurs, ou plus, parmi la pluralité de positions de marqueurs (302).

14. Système (200) pour générer un humain numérique (400) pour un environnement virtuel, le système (200) comprenant :
un processeur (204) ; et
une mémoire (206) couplée au processeur (204), la mémoire (206) comprenant des instructions qui, lorsqu'elles sont exécutées par le processeur (204), configurent le processeur (204) pour exécuter des étapes de procédé selon l'une quelconque des revendications 1 à 13.

15. Produit-programme informatique comprenant un code de programme informatique qui, lorsqu'il est exécuté par un processeur (204), amène le processeur (204) à réaliser le procédé (100) selon l'une quelconque des revendications 1 à 13.
